(19) Europäisches Patentamt

European Patent Office

Office européen des brevets

(11) **EP 0 695 777 A1**

# (12) EUROPÄISCHE PATENTANMELDUNG

(43) Veröffentlichungstag:
07.02.1996 Patentblatt 1996/06

(51) Int. Cl.⁶: **C08J 5/18, B32B 27/32**

(21) Anmeldenummer: 95109714.6

(22) Anmeldetag: 22.06.1995

(84) Benannte Vertragsstaaten:
**BE DE ES FR GB IT NL**

(30) Priorität: 03.08.1994 DE 4427376

(71) Anmelder: **HOECHST AKTIENGESELLSCHAFT**
**D-65926 Frankfurt am Main (DE)**

(72) Erfinder:
- **Schreck, Michael**
  **D-60529 Frankfurt (DE)**
- **Dries, Thomas**
  **D-55270 Schwabenheim (DE)**
- **Wilhelm, Adolf**
  **D-65199 Wiesbaden (DE)**

(54) **Orientierte Polyolefinfolie mit Alken-Blockcopolymer, Verfahren zu ihrer Herstellung und ihre Verwendung**

(57)     Es wird eine orientierte Polyolefinfolie beschrieben, die mindestens eine vakuolenhaltige Schicht enthält. Die vakuolenhaltige Schicht enthält ein mehrphasiges Alken-Blockcopolymerisat.

Außerdem wird ein Verfahren zur Herstellung der Folie sowie ihre Verwendung beschrieben.

**Beschreibung**

Die vorliegende Erfindung betrifft eine orientierte Polyolefinfolie, die mindestens eine vakuolenhaltige Schicht enthält. Die Erfindung betrifft ferner ein Verfahren zur Herstellung der Polyolefinfolie sowie ihre Verwendung. Die Erfindung betrifft weiterhin die Verwendung von Blockcopolymeren.

Polyolefinfolien werden für viele verschiedene Anwendungen eingesetzt und können grob gesehen in zwei Gruppen unterteilt werden, die transparenten und die nicht transparenten Folientypen. Transparente Folien haben naturgemäß eine möglichst geringe Trübung, während die nicht transparenten Typen eine so hohe Trübung haben, daß eine sinnvolle Messung dieser Größe nicht möglich ist. Daher bestimmt man bei nicht transparenten Folien stattdessen deren Lichtdurchlässigkeit. Je nach Grad der Lichtdurchlässigkeit unterscheidet man zwischen transluzenten und opaken bzw. weißen Folien.

Nicht transparente Folien nach dem Stand der Technik enthalten in mindestens einer Schicht Pigmente oder vakuoleniniziierende Teilchen bzw. eine Kombination aus diesen, wodurch die Folien im Vergleich zu transparenten Folien eine reduzierte Lichtdurchlässigkeit haben.

Pigmente sind Teilchen, die im wesentlichen nicht zur Vakuolenbildung beim Verstrecken der Folie führen. Die färbende Wirkung der Pigmente wird durch die Teilchen selbst verursacht. Der Begriff "Pigment" ist im allgemeinen an eine Teilchengröße von 0,01 bis maximal 1 μm gebunden und umfaßt sowohl sogenannte "Weißpigmente", welche die Folien weiß einfärben, als auch "Buntpigmente", welche der Folie eine bunte oder schwarze Farbe verleihen.

Opake Folien enthalten vakuoleniniziierende Teilchen, welche mit der Polymermatrix unverträglich sind und beim Verstrecken der Folien zur Bildung von vakuolenartigen Hohlräumen führen, wobei Größe, Art und Anzahl der Vakuolen vom Material und von der Größe der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen Vakuole/Polymermatrix entsteht. Im allgemeinen beträgt der mittlere Teilchendurchmesser der vakuoleniniziierenden Teilchen 1 bis 10 μm.

Übliche vakuoleniniziierende Teilchen sind anorganische und/oder organische, mit Polypropylen unverträgliche Materialien wie Oxide, Sulfate, Carbonate oder Silicate sowie unverträgliche Polymere wie Polyester oder Polyamide. "Unverträgliche Materialien" bzw. "unverträgliche Polymere" bedeutet, daß das Material bzw. das Polymere in der Folie als separates Teilchen bzw. als separate Phase vorliegt.

Die Dichte der nicht transparenten Folien kann innerhalb weiter Grenzen variieren und hängt von der Art und der Menge der Füllstoffe ab. Die Dichte liegt im allgemeinen im Bereich von 0,4 bis 1,1 g/cm$^3$.

Im einzelnen sind derartige nicht transparente Folien in folgenden Schriften beschrieben:

Die EP-A-0 004 633 beschreibt eine heißsiegelbare, opake, biaxial orientierte Kunststoffolie, die fein verteilte feste, insbesondere anorganische, Teilchen einer Größe von 0,2 bis 20 μm enthält und mindestens eine Heißsiegelschicht aus einem Propylen-Ethylen-Copolymeren aufweist. Zur Erzielung der Opazität sind außer den anorganischen Teilchen auch opake organische Partikel z. B. aus vernetztem Kunststoff geeignet, wobei der Schmelzpunkt der Kunststoffteilchen oberhalb der während der Herstellung der Folie auftretenden Temperaturen liegt. Die Folie soll gegenüber dem Stand der Technik in ihrer Siegelfähigkeit, in ihrem Glanz und in ihrer Bedruckbarkeit verbessert sein. Die mechanischen Eigenschaften der Folie sind verbesserungsbedürftig, insbesondere ist die Biegesteifigkeit dieser Folien in Querrichtung 10 bis 20 % höher als in Längsrichtung. Gerade die Biegesteifigkeit in Längsrichtung ist jedoch für den Verarbeiter wichtiger.

Die EP-A-0 083 495 beschreibt eine undurchsichtige, biaxial orientierte Folie mit satiniertem Aussehen und einem Oberflächenglanz von größer als 100 %, die mindestens einen kugelförmigen Feststoffpartikel je Vakuole enthält. Des weiteren umfaßt die Folie auf beiden Oberflächen der Kernschicht eine porenfreie, transparente, thermoplastische Mantelschicht, die eine die Optik der Folie bestimmende Dicke aufweist. Als Material für den Feststoffpartikel wird z. B. Nylon angegeben. Die Teilchen haben in der Regel einen Durchmesser, der größer als 1 μm ist. Auch bei diesen Folien sind die mechanischen Eigenschaften, insbesondere die Foliensteifigkeit, noch verbesserungsbedürftig.

DE-A-42 11 413 beschreibt Folien und Formkörper aus einem thermoplastischen Kunststoff. Der thermoplastische Kunststoff ist ein thermoplastisches Elastomer und besteht aus einem teilkristallinen Blockcopolymerisat und einem polymeren Modifizierungsmittel. Das mehrphasige Alken-Blockcopolymerisat hat einen Copolymerisatanteil von 51 bis 85 %. Die Härte der resultierenden Folie ist sehr niedrig, und der Rohstoff ist aufgrund des hohen Anteils an elastomerem Copolymer im Blockcopolymerisat für orientierte Polypropylenfolien ungeeignet.

EP-A-0 564 846 beschreibt eine matte orientierte Polypropylenfolie, welche durch mindestens eine einseitige coextrudierte Schicht aus einer Mischung eines Blockcopolymeren mit anderen Polymeren ihr Aussehen erhält.

DE-A-42 02 663 beschreibt eine nicht orientierte Folie, welche aus einer Mischung aus einem heterophasigen Polyolefin, einem Ethylen-Butylen-Copolymerisat und einem Propylen/Butylen/Ethylen-Terpolymerisat besteht.

Die Aufgabe der vorliegenden Erfindung bestand darin, eine nicht transparente Polyolefinfolie zur Verfügung zu stellen, bei der die Transluzenz bzw. die Opazität durch einfache Maßnahmen erzielt und in einem weiten Maße variiert werden kann. Des weiteren soll die Folie gute mechanische und homogene optische Eigenschaften aufweisen. Insbesondere sind eine hohe Foliensteifigkeit und eine hohe Reißfestigkeit, insbesondere in Längsrichtung, besonders wünschenswert. Bezüglich der optischen Eigenschaften sind eine hohe Opazität und ein hoher Weißgrad bei gegebener Dichte besonders wichtig.

Diese Aufgabe wird gelöst durch eine Polyolefinfolie der eingangs genannten Gattung, deren kennzeichnendes Merkmal darin besteht, daß die vakuolenhaltige Schicht ein mehrphasiges Alken-Blockcopolymerisat enthält.

Die erfindungsgemäße Folie ist einschichtig oder mehrschichtig. Einschichtige Ausführungsformen sind wie die nachstehend beschriebene vakuolenhaltige Schicht der mehrschichtigen Folie aufgebaut. Mehrschichtige Ausführungsformen sind mindestens zweischichtig und umfassen immer die vakuolenhaltige Schicht und zumindest eine weitere Schicht, wobei die vakuolenhaltige Schicht die Basis-, die Zwischen- oder die Deckschicht der mehrschichtigen Folie bilden kann.

In einer bevorzugten Ausführungsform bildet die vakuolenhaltige Schicht die Basisschicht der Folie mit mindestens einer, vorzugsweise mit beidseitigen Deckschicht/en, wobei gegebenenfalls zwischen der vakuolenhaltigen Basisschicht und der/den Deckschicht/en einseitig eine oder beidseitig nicht vakuolenhaltige oder vakuolenhaltige Zwischenschicht/en vorhanden sein kann/können. In einer weiteren bevorzugten Ausführungsform bildet die vakuolenhaltige Schicht eine Zwischenschicht der Mehrschichtfolie, welche zwischen der nicht vakuolenhaltigen Basisschicht und der Deckschicht vorhanden ist. Weitere Ausführungsformen mit vakuolenhaltiger Zwischenschicht sind fünfschichtig aufgebaut und haben beidseitig vakuolenhaltige Zwischenschichten. In einer weiteren Ausführungsform kann die vakuolenhaltige Schicht eine Deckschicht auf der vakuolenhaltigen oder nicht vakuolenhaltigen Basis- oder Zwischenschicht bilden. Die Basisschicht ist im Sinne der vorliegenden Erfindung diejenige Schicht, welche mehr als 40 %, insbesondere mehr als 50 %, der Gesamtfoliendicke ausmacht. Die Deckschicht ist die Schicht, welche die äußerste Schicht der Folie bildet.

Je nach ihrem vorgesehenen Verwendungszweck kann die jeweilige Ausführungsform der nicht transparenten Folie transluzent, opak oder weiß-opak sein. Unter nicht transparenten Folien werden im Sinne der vorliegenden Erfindung solche Folien verstanden, deren Lichtdurchlässigkeit nach ASTM-D 1003-77 unter 95 %, vorzugsweise im Bereich von 5 bis 80 %, liegt. Zwischen transluzenten und opaken bzw. weiß-opaken Typen wird nach ihrer Lichtdurchlässigkeit unterschieden. Transluzente Folien haben eine Lichtdurchlässigkeit von 95 bis 70 %, und opake bzw. weiß-opake Typen haben eine Lichtdurchlässigkeit von 69 bis 0 %, vorzugsweise 69 bis 5 %, jeweils gemessen nach ASTM-D 1003-77.

Die vakuolenhaltige Schicht der erfindungsgemäßen Folie enthält ein mehrphasiges Alken-Blockcopolymerisat, vorzugsweise ein Propylen-Blockcopolymerisat, und gegebenenfalls weitere zugesetzte Additive in jeweils wirksamen Mengen. Der Anteil des Alken-Blockcopolymerisats in der vakuolenhaltigen Schicht kann je nach Ausführungsform der Erfindung und je nach dem gewünschten Eigenschaftsbild der Folie innerhalb weiter Grenzen variieren. Im allgemeinen enthält die vakuolenhaltige Schicht mindestens 5 bis 100 Gew.-%, vorzugsweise 10 bis 90 Gew.-%, insbesondere 25 bis 70 Gew.-%, des Alken-Blockcopolymerisats, bezogen auf das Gewicht der vakuolenhaltigen Schicht.

Das mehrphasige Alken-Blockcopolymerisat besteht im wesentlichen aus einer elastomeren Komponente und einer teilkristallinen Komponente, welche miteinander nicht vollständig mischbar sind und daher mindestens zwei Phasen bilden. Vorzugsweise enthält das Blockcopolymere 5 bis 45 Gew.-%, insbesondere 5 bis 20 Gew.-%, der elastomeren Komponente. Die kristalline Komponente ist im allgemeinen ein Propylenpolymer und entsprechend zu 55 bis 95 Gew.-%, vorzugsweise zu 80 bis 95 Gew.-%, im Blockcopolymeren enthalten. Der Ethylengehalt des Blockcopolymeren liegt vorzugsweise im Bereich von 2 bis 40 Gew.-%, insbesondere im Bereich von 3 bis 25 Gew.-%, und der Propylengehalt beträgt mindestens 50 Gew.-%, vorzugsweise 70 bis 97 Gew.-%, Propylen. Der Ethylengehalt wird IR-spektroskopisch bestimmt. Die vorstehenden Angaben in Gew.-% beziehen sich jeweils auf das Blockcopolymere. Der Schmelzbereich des Blockcopolymeren beträgt 140 bis 180 °C, vorzugsweise 150 bis 170 °C, und der Schmelzflußindex liegt im Bereich von 0,5 bis 8 g/10 min, vorzugsweise 2 bis 6 g/10 min (bei 230 °C und einer Kraft von 21,6 N (DIN 53 735).

Die elastomere Komponente des Blockcopolymeren ist im allgemeinen ein Ethylencopolymerisat, vorzugsweise ein Ethylen-Propylen-Copolymerisat, in welches gegebenenfalls geringfügige Mengen (<5 Gew.-%) eines weiteren Comonomeren einpolymerisiert sein können. Der Ethylengehalt der elastomeren Komponente beträgt im allgemeinen 20 bis 95 Gew.-%, vorzugsweise 40 bis 70 Gew.-%, bezogen auf das Gewicht der elastomeren Komponente. Als Comonomere sind Propylen, 1-Alkene mit 4 bis 10 C-Atomen, z. B. 1,3-Butadien, cyclische Olefine mit 6 bis 10 C-Atomen wie z. B. Cyclopenten, Norbornen, Cycloocten oder Ethylidennorbornen geeignet. Die Glastemperatur $T_G$ der elastomeren Komponente liegt im allgemeinen unter 25 °C, vorzugsweise unter 0 °C, und insbesondere im Bereich von -100 °C bis -10 °C, und ihre Kristallinität liegt unter 5 %, vorzugsweise unter 3 %, oder sie ist nahezu 0 %.

Überraschenderweise bilden sich bei der biaxialen Orientierung der blockcopolymerhaltigen Folien vakuolenartige Hohlräume in der Polymermatrix, ohne daß wie nach dem Stand der Technik üblich vakuoleniniziierende Füllstoffe zugesetzt werden müssen. In rasterelektronenmikroskopischen Aufnahmen sind diese Vakuolen deutlich zu erkennen. Daraus läßt sich schließen, daß es bei der Streckorientierung der blockcopolymerhaltigen Folie zwischen der teilkristallinen Komponente, d. h. dem Propylenpolymeren, und der elastomeren Komponente, d. h. dem Ethylen-Propylen-Copolymeren, zu Abrissen kommt, durch welche sich die Mikrohohlräume oder Vakuolen bilden, im Bereich derer das sichtbare Licht gebrochen wird. Die Folie erhält dadurch ein transluzentes oder opakes Aussehen und eine reduzierte Dichte, was sie für bestimmte Verpackungszwecke, insbesondere auf dem Lebensmittelsektor, besonders geeignet macht.

Die Herstellung der erfindungsgemäß geeigneten Alken-Blockcopolymeren ist an sich bekannt und beispielsweise in P.Galli, T. Simonazzi und D. del Duca, Acta Polymerica 39 (1988), Nr. 1/2, S. 81 bis 90, beschrieben. Darüber hinaus sind diese Polymerklassen gängige Handelsprodukte, z. B. ®Hostalen PP der Firma Hoechst AG.

In einer weiteren bevorzugten Ausführungsform der Erfindung enthält die vakuolenhaltige Schicht neben dem Alken-Blockcopolymeren ein Propylenpolymer im allgemeinen in einer Menge von bis zu 95 Gew.-%, vorzugsweise 10 bis 90 Gew.-%, insbesondere 30 bis 75 Gew.-%, jeweils bezogen auf das Gewicht der Schicht. Je nach dem Verhältnis von Propylenpolymer zu Blockcopolymer resultiert ein Gehalt der elastomeren Komponente in der vakuolenhaltigen Schicht von 2 bis 15 Gew.-%, vorzugsweise 4 bis 10 Gew.-%, bezogen auf das Gewicht der Schicht.

Das Propylenpolymere enthält 90 bis 100 Gew.-%, vorzugsweise 95 bis 100 Gew.-%, insbesondere 98 bis 100 Gew.-%, Propylen und besitzt einen Schmelzpunkt von 120 °C oder höher, vorzugsweise 150 bis 175 °C und im allgemeinen einen Schmelzflußindex von 0,5 g/10 min bis 10 g/10 min, vorzugsweise 2 g/10 min bis 8 g/10 min, bei 230 °C und einer Kraft von 21,6 N (DIN 53 735).

Isotaktisches Propylenhomopolymer mit einem ataktischen Anteil von 15 Gew.-% und weniger, Copolymere von Ethylen und Propylen mit einem Ethylengehalt von 10 Gew.-% oder weniger, Copolymere von Propylen mit $C_4$-$C_8$-Olefinen mit einem Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die vakuolenhaltige Schicht dar, wobei isotaktisches Propylenhomopolymer besonders bevorzugt ist. Die angegebenen Gewichtsprozente beziehen sich auf das jeweilige Polymere.

Des weiteren ist als Polypropylen eine Mischung aus den genannten Propylenhomo- und/oder -copolymeren und anderen Polyolefinen, insbesondere mit 2 bis 10 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, MDPE, VLDPE, LDPE und LLDPE, wobei der Anteil dieser Polyolefine jeweils 15 Gew.-%, bezogen auf die Polymermischung, nicht übersteigt.

In einer weiteren bevorzugten Ausführungsform kann sowohl das in der vakuolenhaltigen Schicht eingesetzte Alken-Blockcopolymere als auch das gegebenenfalls zugesetzte Propylenpolymere bei der Granulierung durch den Zusatz von organischen Peroxiden teilabgebaut werden. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

MFI$_1$ =     Schmelzflußindex des Propylenpolymeren vor dem Zusatz des organischen Peroxids
MFI$_2$ =     Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

In einer weiteren Ausführungsform der Erfindung enthält die erfindungsgemäße Folie in der blockcopolymerhaltigen Schicht und/oder in einer anderen Schicht zusätzlich an sich bekannte Füllstoffe im allgemeinen in einer Menge von 1 bis 30 Gew.-%, bezogen auf das Gewicht der jeweiligen Schicht. Von dem Begriff "Füllstoffe" werden im Sinne der vorliegenden Erfindung die üblichen vakuoleniniziierenden festen Teilchen, im folgenden "feste Teilchen" genannt, und Pigmente umfaßt.

Feste Teilchen sind mit der Polymermatrix unverträglich und führen beim Verstrecken der Folien zur Bildung von zusätzlichen vakuolenartigen Hohlräumen, wobei Größe, Art und Anzahl dieser Vakuolen von der Größe der festen Teilchen und den Streckbedingungen wie Streckverhältnis und Strecktemperatur abhängig sind. Die zusätzlichen Vakuolen tragen durch Lichtstreuung an den Grenzflächen "Vakuole/Polymermatrix" zum opaken Aussehen der Folie bei. In der Regel haben die üblichen festen Teilchen eine Mindestgröße von 1 μm, um zu einer effektiven, d. h. opak machenden Menge an Vakuolen zu führen. Im allgemeinen beträgt der mittlere Teilchendurchmesser der festen Teilchen 1 bis 6 μm, vorzugsweise 1,5 bis 5 μm. Der chemische Charakter der festen Teilchen spielt eine untergeordnete Rolle.

Übliche feste Teilchen sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Calciumcarbonat, Siliciumdioxid und Titandioxid bevorzugt eingesetzt werden. Als organische feste Teilchen kommen die üblicherweise verwendeten, mit dem Polymeren der Basisschicht unverträglichen Polymeren in Frage, insbesondere Polyolefine wie HDPE, Polylbuten, Polyester, Polystyrole, Polyamide, halogenierte organische Polymere, wobei Polyester wie beispielsweise Polybutylenterephthalate bevorzugt sind. "Unverträgliche Materialien bzw. unvertragliche Polymere" im Sinne der vorliegenden Erfindung bedeutet, daß das Material bzw. das Polymere in der Folie als separates Teilchen bzw. als separate Phase vorliegt.

Pigmente umfassen im Sinne der vorliegenden Erfindung solche Teilchen, die im wesentlichen nicht zur Vakuolenbildung beim Verstrecken führen. Die färbende Wirkung der Pigmente wird durch die Teilchen selbst verursacht. Der Begriff "Pigment" ist im allgemeinen an eine Teilchengröße von 0,01 bis maximal 1 μm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 μm, vorzugsweise 0,01 bis 0,7 μm, insbesondere 0,01 bis 0,4 μm.

Übliche Pigmente sind Materialien wie z. B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, Ruß, Graphit sowie weitere bis 300 °C thermisch stabile Farbpigmente, worunter Weißpigmente wie Calciumcarbonat, Siliciumdioxid, Titandioxid und Bariumsulfat - bevorzugt eingesetzt werden.

Die bevorzugten Titandioxidteilchen bestehen zu mindestens 95 Gew.-% aus Rutil und werden bevorzugt mit einem Überzug aus anorganischen Oxiden eingesetzt, wie er üblicherweise als Überzug für $TiO_2$-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. $TiO_2$-Partikel mit einem Überzug werden z. B. in der EP-A-0 078 633 und EP-A-0 044 515 beschrieben.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den $TiO_2$-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, jeweils bezogen auf 100 g $TiO_2$-Teilchen, enthalten. Als besonders vorteilhaft hat es sich erwiesen, wenn die $TiO_2$-Teilchen mit $Al_2O_3$ oder mit $Al_2O_3$ und Polydimethylsiloxan beschichtet sind.

Die erfindungsgemäßen Folien können je nach Einsatzzweck der Folie oder aktuellem Modetrend zusätzlich zu dem Alken-Blockcopolymeren nur feste Teilchen oder nur Pigmente oder eine Kombination aus festen Teilchen und Pigmenten in einer der Folienschichten enthalten. Alle nachstehenden Mengenangaben bezüglich der Füllstoffe sind in Gewichtsprozent (Gew.-%) und beziehen sich auf das Gewicht der jeweiligen Schicht.

Folien, welche zusätzlich nur mit Pigment ausgerüstet sind, enthalten dieses im allgemeinen in einer Menge von 2 bis 25 Gew.-%, insbesondere 3 bis 20 Gew.-%, bevorzugt 5 bis 15 Gew.-%. Als Pigmente sind Weißpigmente, insbesondere $TiO_2$ und $BaSO_4$ mit einem mittleren Teilchendurchmesser von 0,01 bis 0,7 μm, insbesondere 0,01 bis 0,4 μm, bevorzugt

Folien, welche zusätzlich nur mit vakuoleniniziierenden festen Teilchen ausgerüstet sind, enthalten diese im allgemeinen in einer Menge von 1 bis 25 Gew.-%, vorzugsweise 2 bis 14 Gew.-%. Als vakuoleniniziierende Teilchen sind $CaCO_3$, $SiO_2$, Polyamide, unverträgliche Polyolefine wie z. B. Polyethylenterephthalate oder Polybutylenterephthalate bevorzugt. Besonders vorteilhaft ist $CaCO_3$` insbesondere $CaCO_3$ mit einem mittleren Teilchendurchmesser von 1 bis 5 μm, vorzugsweise 2 bis 5 μm.

Folien, welche zusätzlich mit vakuoleniniziierenden festen Teilchen und mit Pigment ausgerüstet sind, enthalten feste Teilchen in einer Menge von 1 bis 10 Gew.-%, bevorzugt 1 bis 5 Gew.-%, und Pigment in einer Menge von 1 bis 7 Gew.-%, bevorzugt 1 bis 5 Gew.-%. Für solche Folientypen ist eine Kombination aus $CaCO_3$ als feste Teilchen und $TiO_2$ als Pigment bevorzugt.

Die Dichte der erfindungsgemäßen Folien kann innerhalb weiter Grenzen variieren und hängt unter anderem von der Art und der Menge des Blockcopolymeren und der Menge der gegebenenfalls zugesetzten Füllstoffe ab. Die Dichte liegt im allgemeinen unter der rechnerischen Dichte der Einzelkomponenten der Folie, d. h. die Dichte der Folie ist reduziert. Im allgemeinen haben die Folien eine Dichte von maximal 1,5 g/cm³, vorzugsweise liegt die Dichte im Bereich von 0,4 bis 1,3 g/cm³, insbesondere 0,5 bis 1,0 g/cm³.

Die erfindungsgemäße mehrschichtige Ausführungsform der Folie umfaßt mindestens eine weitere vakuolenhaltige oder nicht vakuolenhaltige Schicht, welche die Basisschicht, eine Zwischenschicht oder eine siegelfähige oder nicht siegelfähige Deckschicht der mehrschichtigen Folie sein kann. Grundsätzlich können die erfindungsgemäße vakuolenhaltige Schicht und die andere/n Schicht/en gleich oder verschieden aufgebaut sein.

Die andere Schicht enthält im allgemeinen 75 bis 100 Gew.-%, insbesondere 90 bis 99,5 Gew.-%, olefinische Polymere mit 2 bis 10 Kohlenstoffatomen, jeweils bezogen auf das Gewicht der anderen Schicht, und gegebenenfalls Additive in jeweils wirksamen Mengen.

Beispiele für derartige olefinische Polymere sind

ein Propylenhomopolymer oder

ein Copolymer von

Ethylen und Propylen oder

Ethylen und Butylen-1 oder

Propylen und Butylen-1 oder

ein Terpolymer von

Ethylen und Propylen und Butylen-1 oder

eine Mischung aus zwei oder mehreren der genannten Homo-, Co- und Terpolymeren oder

ein Blend aus zwei oder mehreren der genannten Homo-, Co- und Terpolymeren, gegebenenfalls gemischt mit einem oder mehreren der genannten Homo-, Co- und Terpolymeren,

wobei insbesondere Propylenhomopolymer oder

statistische Ethylen-Propylen-Copolymere mit

einem Ethylengehalt von 1 bis 10 Gew.-%, bevorzugt 2,5 bis 8 Gew.-%, oder

statistische Propylen-Butylen-1-Copolymere mit

einem Butylengehalt von 2 bis 25 Gew.-%, bevorzugt 4 bis 20 Gew.-%,

jeweils bezogen auf das Gesamtgewicht des Copolymeren, oder

statistische Ethylen-Propylen-Butylen-1-Terpolymere mit

einem Ethylengehalt von 1 bis 10 Gew.-%, bevorzugt 2 bis 6 Gew.-%, und

einem Butylen-1-Gehalt von 2 bis 20 Gew.-%, bevorzugt 4 bis 20 Gew.-%,

jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%

und einem Propylengehalt von 50 bis 90 Gew.-%

und einem Butylen-1-Gehalt von 10 bis 40 Gew.-%,

jeweils bezogen auf das Gesamtgewicht des Polymerblends, bevorzugt sind.

Das in der/den anderen Schicht/en eingesetzte Propylenhomopolymere enthält 97 bis 100 Gew.-% Propylen und besitzt einen Schmelzpunkt von 140 °C oder höher, vorzugsweise 150 bis 175 °C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere hat im allgemeinen einen Schmelzflußindex von 1,5 g/10 min bis 20 g/10 min, vorzugsweise 2,0 g/10 min bis 15 g/10 min. Die angegebenen Gewichtsprozente beziehen sich auf das Polymere.

Die in der/den anderen Schichten eingesetzten vorstehend beschriebenen Copolymeren weisen im allgemeinen einen Schmelzflußindex von 1,5 bis 30 g/10 min, vorzugsweise von 3 bis 15 g/10 min, auf. Der Schmelzpunkt liegt bevorzugt im Bereich von 120 bis 140 °C. Die in der/den Schichten eingesetzten Terpolymeren haben einen Schmelzflußindex im Bereich von 1,5 bis 30 g/10 min, vorzugsweise von 3 bis 15 g/10 min, und einen Schmelzpunkt im Bereich von 120 bis 140 °C. Das vorstehend beschriebene Blend aus Co- und Terpolymeren hat einen Schmelzflußindex von 5 bis 9 g/10 min und einen bevorzugten Schmelzpunkt von 120 bis 150 °C. Alle vorstehend angegebenen Schmelzflußindices werden bei 230 °C und einer Kraft von 21,6 N (DIN 53 735) gemessen. Andere Schichten aus Co- und/oder Terpolymeren bilden vorzugsweise die Deckschichten von siegelfähigen Ausführungsformen der Folie.

Grundsätzlich kann die andere Schicht zusätzlich die vorstehend für die vakuolenhaltige Schicht beschriebenen Pigmente in entsprechenden Mengen enthalten. Ausführungsformen mit einer vakuolenhaltigen anderen Schicht enthalten die vorstehend beschriebenen vakuoleniniziierenden Füllstoffe in entsprechenden Mengen.

Gegebenenfalls können alle vorstehend beschriebenen Deckschichtpolymeren in der gleichen Weise wie vorstehend für die vakuolenhaltige Schicht beschrieben bei der Granulierung durch den Zusatz von organischen Peroxiden teilabgebaut werden. Hierbei werden im allgemeinen die gleichen Peroxide wie vorstehend für die vakuolenhaltige Schicht beschrieben verwendet. Der Abbaufaktor A liegt im allgemeinen in einem Bereich von 3 bis 15, vorzugsweise 6 bis 10.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 5 bis 200 µm, wobei 10 bis 100 µm, insbesondere 20 bis 80 µm, bevorzugt sind. Die Dicke der gegebenenfalls vorhandenen Zwischenschicht/en beträgt jeweils unabhängig voneinander 2 bis 12 µm, wobei Zwischenschichtdicken von 3 bis 8 µm, insbesondere 3 bis 6 µm, bevorzugt sind. Die angegebenen Werte beziehen sich jeweils auf eine Zwischenschicht. Die Dicke der Deckschicht/en wird unabhängig von anderen Schichten gewählt und liegt bevorzugt im Bereich von 0,1 bis 10 µm, insbesondere 0,2 bis 5 µm, vorzugsweise 0,3 bis 2 µm, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Um bestimmte Eigenschaften der erfindungsgemäßen Polyolefinfolie noch weiter zu verbessern, können sowohl die einschichtige Folie als auch die vakuolenhaltige Schicht, die andere Schicht, die Basis-, die Zwischen- und/oder die Deckschicht/en der Mehrschichrfolie Zusätze in einer jeweils wirksamen Menge enthalten, gegebenenfalls mit dem Polymeren verträgliche niedermolekulare Kohlenwasserstoffharze und/oder vorzugsweise Antistatika und/oder Antiblockmittel und/oder Gleitmittel und/oder Stabilisatoren und/oder Neutralisationsmittel sowie Antiblockmittel. Alle Mengenangaben in der folgenden Ausführung in Gewichtsprozent (Gew.-%) beziehen sich jeweils auf die Schicht oder Schichten, der oder denen das Additiv zugesetzt sein kann.

Ein niedermolekulares Harz wird bevorzugt z. B. zur Verbesserung der Wasserdampfdurchlässigkeit (WDD) und zur Verbesserung der Foliensteifigkeit zugesetzt. Kohlenwasserstoffharze sind niedermolekulare Polymere, deren Molekulargewicht im allgemeinen in einem Bereich von 300 bis 8 000, vorzugsweise 400 bis 5 000, vorzugsweise 500 bis 2 000, liegt. Damit ist das Molekulargewicht der Harze deutlich niedriger als das der Propylenpolymeren, welche die Hauptkomponente der einzelnen Folienschichten bilden und im allgemeinen ein Molekulargewicht von über 100 000 haben. Der Anteil des Harzes liegt in einem Bereich von 1 bis 30 Gew.-%, vorzugsweise 2 bis 10 Gew.-%. Der Erweichungspunkt des Harzes liegt zwischen 60 und 180 °C (gemessen nach DIN 1995-U4, entspricht ASTM E-28), vorzugsweise über 100 bis 160 °C. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben). Geeignete Erdölharze sind in zahlreichen Schriften beschrieben wie beispielsweise EP-A-0 180 087, auf die hier ausdrücklich Bezug genommen wird.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit $\omega$-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,3 Gew.-%.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid. Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 mm²/s.

Als Stabilisatoren können die üblichen stabilisierend wirkenden Verbindungen für Ethylen-, Propylen- und andere $\alpha$-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Die Antiblockmittel werden bevorzugt den Deckschichten zugesetzt. Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanamin-formaldehyd-Polymere, Siliciumdioxid und Calciumcarbonat. Die wirksame Menge an Antiblockmittel liegt im Bereich von 0,01 bis 10 Gew.-%, vorzugsweise 0,1 bis 5 Gew.-%. Die mittlere Teilchengröße liegt zwischen 1 und 6 μm, insbesondere 2 und 5 μm, wobei Teilchen mit einer kugelförmigen Gestalt, wie in der EP-A-0 236 945 und der DE-A-38 01 535 beschrieben, besonders geeignet sind.

Neutralisationsmittel sind vorzugsweise Calciumstearat und/oder Calciumcarbonat einer mittleren Teilchengröße von höchstens 0,7 μm, einer absoluten Teilchengröße von kleiner 10 μm und einer spezifischen Oberfläche von mindestens 40 m²/g. Im allgemeinen wird das Neutralisationsmittel in einer Menge von 0,02 bis 0,1 Gew.-% zugesetzt.

Die Erfindung betrifft weiterhin ein Verfahren zur Herstellung der erfindungsgemäßen Folie nach dem an sich bekannten Extrusionsverfahren. Im Rahmen dieses Verfahrens wird so vorgegangen, daß die Blockcopolymeren gegebenenfalls gemischt den Propylenpolymeren entweder in Reinform oder als granuliertes Konzentrat (Masterbatch) dem Extruder zugeführt und dann komprimiert und erwärmt werden. Anschließend werden die der Folie bzw. den einzelnen Schichten der Folie entsprechenden Schmelzen durch eine Flachdüse extrudiert bzw. coextrudiert, und die so erhaltene Folie wird zur Verfestigung auf einer oder mehreren Walze/n abgezogen. Die Folie wird anschließend orientiert, thermofixiert und gegebenenfalls an der zur Behandlung vorgesehenen Oberfläche corona- oder flammbehandelt.

Es hat sich als besonders günstig erwiesen, die Abzugswalze oder -walzen, durch die die ausgepreßte Folie auch abgekühlt und verfestigt wird, bei einer Temperatur von 10 bis 90 °C zu halten, bevorzugt 20 bis 60 °C.

Die so erhaltene Vorfolie wird vorzugsweise längs und quer zur Extrusionsrichtung gestreckt, was zu einer biaxialen Orientierung der Molekülketten führt. Die biaxiale Orientierung kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, besonders günstig ist. In Längsrichtung wird vorzugsweise 4:1 bis 7:1 und in Querrichtung vorzugsweise 6:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

Die Temperaturen, bei denen die Längs- und die Querstreckung durchgeführt werden, können in einem großen Bereich variieren. Im allgemeinen wird die Längsstreckung bei 90 bis 150 °C, vorzugsweise 100 bis 140 °C, und die Querstreckung bei 140 bis 190 °C, vorzugsweise 150 bis 180 °C, durchgeführt.

An die biaxiale Streckung der Folie schließt sich ihre Thermofixierung (Wärmebehandlung) an, wobei die Folie etwa 0,5 bis 10 s lang bei einer Temperatur von 110 bis 130 °C gehalten wird. Anschließend wird die Folie in üblicher Weise mit einer Aufwickeleinrichtung aufgewickelt.

Gegebenenfalls kann/können wie oben erwähnt nach der biaxialen Streckung eine oder beide Oberfläche/n der Folie nach einer der bekannten Methoden corona- oder flammbehandelt werden, wobei für eine Flammbehandlung mit polarisierter Flamme (vgl. US-A-4,622,237) eine elektrische Gleichspannung zwischen einem Brenner (negativer Pol) und einer Kühlwalze angelegt wird. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb der Polymermoleküle werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Für die alternative Coronabehandlung wird die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 38 bis 45 mN/m bevorzugt sind.

Die erfindungsgemäßen Folien zeichnen sich durch eine isotrope Biegesteifigkeit aus, d. h. die Biegesteifigkeit der Folie in Längs- und Querrichtung ist etwa gleich groß. Der Unterschied beträgt im allgemeinen nicht mehr als 10 %, bezogen auf den Wert in Querrichtung

Die Erfindung wird nun anhand von Ausführungsbeispielen noch näher erläutert.

## Beispiel 1

Es wurde durch Coextrusion und durch anschließende stufenweise Orientierung in Längs- und in Querrichtung eine opake dreischichtige Folie mit symmetrischem Aufbau mit einer Gesamtdicke von 40 μm hergestellt. Die Deckschichten hatten eine Dicke von jeweils 0,6 μm.

A-Basisschicht (= vakuolenhaltige Schicht):

100 Gew.-%   Propylen-Blockcopolymerisat ®Hostalen PPN 1752 mit einem MFI von 1,5 g/10 min, gemessen bei 230 °C und 21,6 N Belastung, und einem Ethylengehalt von 6,5 Gew.-%

B-Deckschichten:

99,67 Gew.-%   statistisches Ethylen-Propylen-Copolymeres mit einem $C_2$-Gehalt von 3,5 Gew.-%
0,33 Gew.-%   $SiO_2$ als Antiblockmittel mit einer mittleren Teilchengröße von 2 μm

Die Herstellungsbedingungen in den einzelnen Verfahrensschritten waren:

| Extrusion: | Temperaturen | A-Schicht: | 280 °C |
| | | B-Schichten: | 280 °C |
| | Temperatur der Abzugswalze: | | 30 °C |
| Längsstreckung: | Temperatur: | | 122 °C |
| | Längsstreckverhältnis: | | 6,0 |
| Querstreckung: | Temperatur: | | 155 °C |
| | Querstreckverhältnis: | | 8,0 |
| Fixierung: | Temperatur: | | 140 °C |
| | Konvergenz: | | 15 % |

**Beispiel 2**

Im Vergleich zu Beispiel 1 wurde in die Basisschicht zusätzlich ein $CaCO_3$ als Füllstoff und Propylenhomopolymer eingearbeitet, so daß die Zusammensetzung der Basisschicht die folgende war:

93 Gew.-%     ®Hostalen PPN 1752
4,9 Gew.-%     Kreide vom Typ Millicarb mit einem mittleren Durchmesser von 3 µm in Form des Masterbatches ®Multibase PPH 7012A
2,1 Gew.-%     Homopolymer aus dem Masterbatch ®Multibase PPH 7012A

**Vergleichsbeispiel 1**

Es wurde eine Dreischichtfolie wie in Beispiel 1 beschrieben hergestellt, wobei jedoch die Basisschicht kein Blockcopolymer enthielt und die folgende Zusammensetzung hatte:

95,1 Gew.-%     Polypropylenhomopolymeres ®XP 123 AC der Firma Statoil
4,9 Gew.-%     Kreide vom Typ ®Millicarb der Firma Omnya mit einem mittleren Teilchendurchmesser von 3 µm, zugegeben in Form des Masterbatches ®Multibase PPH 7012A

Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230 °C gemessen.

Schmelzpunkt

DSC-Messung, Maximum der Schmelzkurve, Aufheizgeschwindigkeit 20 °C/min.

Dichte

Die Dichte wird nach DIN 53 479, Verfahren A, bestimmt

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

## Opazität und Weißgrad

Die Bestimmung der Opazität und des Weißgrades erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53 146 bestimmt. Der Weißgrad wird als WG = RY + 3RZ - 3RX definiert.
WG = Weißgrad; RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet. Eine ausführliche Beschreibung ist z. B. in Hans Loos "Farbmessung", Verlag Beruf und Schule, Itzehoe (1989), beschrieben.

## Lichtdurchlässigkeit

Die Lichtdurchlässigkeit wird in Anlehnung an ASTM-D 1003-77 gemessen.

## Mittleres Molekulargewicht und Molmassen-Dispersität

Die mittleren Molmassen ($M_w$, $M_n$) und die mittlere Molmassen-Dispersität ($M_w/M_n$) wurden in Anlehnung an DIN 55 672, Teil 1, mittels Gelpermeationschromatographie bestimmt. Anstelle von THF wurde als Elutionsmittel Orthodichlorbenzol verwendet. Da die zu untersuchenden olefinischen Polymeren bei Raumtemperatur nicht löslich sind, wird die gesamte Messung bei erhöhter Temperatur ($\sim$ 135 °C) durchgeführt.

## Kristallinität

Die Kristallinität wurde mit Hilfe röntgenographischer Methoden bestimmt. Hierbei wurden die korrigierten gebeugten Röntgen-Intensitäten den Anteilen der amorphen und kristallinen Phasen proportional gesetzt.

## Glastemperatur

Die Proben wurden mit Hilfe der DSC (Difference-Scanning-Calometry) untersucht. Die Aufheizgeschwindigkeit betrug 20 K/min. Um die thermische Vorgeschichte in der Probe zu eliminieren, wurde die Probe im DSC-Gerät zunächst über die Glastemperatur $T_G$ erhitzt, rasch abgekühlt und dann erneut erhitzt (zweites Aufheizen). Aus dem Thermogramm für das zweite Aufheizen wurde die Temperatur für den Glasübergang als halbe Stufenhöhe entnommen.

## Vicat-Erweichungstemperatur

Die Vicat-Erweichungstemperatur VST/B/120 wurde nach 150 306, DIN 53 460 gemessen.

## Biegesteifigkeit

Die Messung erfolgt nach DIN 53 121, wobei abweichend ein Biegewinkel von 15° und eine Meßlänge von 1 mm eingestellt wird.

## Reißfestigkeit

Die Reißfestigkeit wird nach DIN 53 455 bestimmt.

## Schrumpf

Der Schrumpf wird nach DIN 53 377 bestimmt. Die Probe wird 5 min bei 130 °C behandelt.

## Ethylengehalt

Der Ethylengehalt des Copolymeren wurde mittels IR-Spektroskopie bestimmt. Hierbei wurden an ca. 350 μm dicken Preßplatten die Extinktionen pro mm bei 732 cm$^{-1}$ gemessen. Die Zuordnung der Extinktionen pro mm zu Ethylengehalten wurde mit Hilfe einer Eichkurve vorgenommen, welche auf $^{13}$C-NMR-Daten basiert.

## TABELLE

| | Dicke $\mu m$ | Dichte g/cm$^3$ | Biegesteifigkeit | | Opazität | Weißgrad | Glanz | Schrumpf | | Reißfestigkeit N/mm$^2$ | |
|---|---|---|---|---|---|---|---|---|---|---|---|
| | | | quer | längs | | | | längs | quer | längs | quer |
| B1 | 27 | 0,84 | 3,1 | 3,0 | 44 | 40 | 15 | 6,8 | 3,6 | 185 | 185 |
| B2 | 41 | 0,61 | 5,4 | 5,3 | 79 | 78 | 8 | 7,3 | 5,6 | 118 | 108 |
| VB1 | 36 | 0,59 | 5,2 | 4,2 | 73 | 70 | 8 | 3,7 | 0,2 | 100 | 112 |

B = Beispiel

VB = Vergleichsbeispiel

**Patentansprüche**

1. Orientierte Polyolefinfolie, die mindestens eine vakuolenhaltige Schicht enthält, dadurch gekennzeichnet, daß die vakuolenhaltige Schicht ein mehrphasiges Alken-Blockcopolymerisat enthält.

2. Folie nach Anspruch 1, dadurch gekennzeichnet, daß die Folie zusätzlich mindestens eine andere Schicht aufweist.

3. Folie nach Anspruch 1 und/oder 2, dadurch gekennzeichnet, daß die Folie eine Lichtdurchlässigkeit von kleiner 95 %, vorzugsweise 5 bis 80 %, gemessen nach ASTM-D 1003-77, aufweist.

4. Folie nach einem oder mehreren der Ansprüche 1 bis 3, dadurch gekennzeichnet, daß die vakuolenhaltige Schicht 5 bis 100 Gew.-% eines mehrphasigen Alken-Blockcopolymerisats, vorzugsweise eines Propylenblockcopolymerisats, jeweils bezogen auf das Gewicht der vakuolenhaltigen Schicht, enthält.

5. Folie nach einem oder mehreren der Ansprüche 1 bis 4, dadurch gekennzeichnet, daß das mehrphasige Blockcopolymerisat mindestens zwei Phasen aufweist und eine elastomere und eine teilkristalline Komponente enthält.

6. Folie nach einem oder mehreren der Ansprüche 1 bis 5, dadurch gekennzeichnet, daß die vakuolenhaltige Schicht zusätzlich bis zu 95 Gew.-%, vorzugsweise 10 bis 90 Gew.-%, bezogen auf das Gewicht der vakuolenhaltigen Schicht Propylenpolymere enthält.

7. Folie nach einem oder mehreren der Ansprüche 1 bis 6, dadurch gekennzeichnet, daß das mehrphasige Alken-Blockcopolymerisat 2 bis 40 Gew.-% Ethyleneinheiten und mindestens 50 Gew.-% Propyleneinheiten enthält, wobei sich die Gew.-% auf das Gewicht des Blockcopolymeren beziehen.

8. Folie nach einem oder mehreren der Ansprüche 1 bis 6, dadurch gekennzeichnet, daß das mehrphasige Blockcopolymer einen Schmelzbereich von 140 bis 180 °C und einen Schmelzflußindex von 0,5 bis 8 g/10 min hat.

9. Folie nach Anspruch 8, dadurch gekennzeichnet, daß das mehrphasige Alken-Blockcopolymer ein Ethylen-Propylen-Copolymer als elastomere Komponente und ein Propylenpolymer als teilkristalline Komponente enthält.

10. Folie nach einem oder mehreren der Ansprüche 1 bis 9, dadurch gekennzeichnet, daß das elastomere Ethylencopolymer einen Ethylengehalt von 20 bis 95 Gew.-%, vorzugsweise 40 bis 70 Gew.-%, bezogen auf das Gewicht der elastomeren Ethylencopolymeren, aufweist.

11. Folie nach einem oder mehreren der Ansprüche 1 bis 10, dadurch gekennzeichnet, daß das elastomere Ethylencopolymer eine Glastemperatur von <25 °C und eine Kristallinität von unter 5 % hat.

12. Folie nach einem oder mehreren der Ansprüche 1 bis 11, dadurch gekennzeichnet, daß die Folie in einer ihrer Schichten Füllstoffe, vorzugsweise Pigmente und/oder vakuoleniniziierende Teilchen, enthält.

13. Folie nach einem oder mehreren der Ansprüche 1 bis 12, dadurch gekennzeichnet, daß die Dichte der Folie maximal 1,7 g/cm$^3$, vorzugsweise 0,4 bis 1,5 g/cm$^3$, beträgt.

14. Folie nach einem oder mehreren der Ansprüche 1 bis 13, dadurch gekennzeichnet, daß die blockcopolymerhaltige Schicht die Basisschicht, eine Zwischenschicht oder eine Deckschicht der Folie bildet.

15. Folie nach einem oder mehreren der Ansprüche 2 bis 13, dadurch gekennzeichnet, daß die andere Schicht die Basisschicht, eine Zwischenschicht oder eine Deckschicht der Folie bildet.

16. Folie nach einem oder mehreren der Ansprüche 2 bis 13, dadurch gekennzeichnet, daß die andere Schicht 75 bis 100 Gew.-% eines olefinischen Polymeren enthält.

17. Folie nach einem oder mehreren der Ansprüche 1 bis 16, dadurch gekennzeichnet, daß das Polypropylen peroxidisch abgebaut ist.

18. Folie nach einem oder mehreren der Ansprüche 1 bis 17, dadurch gekennzeichnet, daß das mehrphasige Alken-Blockcopolymer peroxidisch abgebaut ist.

**19.** Folie nach einem oder mehreren der Ansprüche 1 und 3 bis 18, dadurch gekennzeichnet, daß die Folie nur aus der vakuolenhaltigen Schicht besteht.

**20.** Verfahren zur Herstellung einer Folie nach Anspruch 1, bei welchem die die Folie bildenden Alken-Blockcopolymeren, Polymeron und/oder Polymermischungen in einem Extruder komprimiert und erwärmt werden, anschließend die Schmelze/n durch eine Flachdüse extrudiert werden, die so erhaltene Folie auf einer oder mehreren Walzen abgezogen wird, die Folie anschließend orientiert und gegebenenfalls thermofixiert und oberflächenbehandelt wird, dadurch gekennzeichnet, daß die Folie in Längsrichtung im Bereich von 4:1 bis 7:1 und in Querrichtung im Bereich von 6:1 bis 11:1 orientiert wird.

**21.** Verfahren nach Anspruch 20, dadurch gekennzeichnet, daß die blockcopolymerhaltige Schicht zusätzlich Polypropylen enthält.

**22.** Verwendung von mehrphasigen Alken-Blockcopolymeren zur Herstellung einer vakuolenhaltigen Schicht in orientierten Folien.

**23.** Verwendung einer Folie gemäß Anspruch 1 als Verpackungsfolie, Etikettenfolie oder Schrumpffolie.

Europäisches Patentamt

# EUROPÄISCHER RECHERCHENBERICHT

Nummer der Anmeldung

EP 95 10 9714

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | DE-A-42 11 413 (BENECKE AG J H) 7.Oktober 1993 <br> * Ansprüche * <br> --- | 1,4,5, 12,14 | C08J5/18 <br> B32B27/32 |
| A | EP-A-0 457 082 (ALKOR GMBH) 21.November 1991 <br><br> * Ansprüche 1,2,4,8,9 * <br> --- | 1,2,4,5, 10-12, 14,15 | |
| D,A | DE-A-42 02 663 (ALKOR GMBH) 5.August 1993 <br><br> * Ansprüche * <br> --- | 1,2, 4-10,12, 14,23 | |
| D,A | EP-A-0 083 495 (MOBIL OIL CORP) 13.Juli 1983 <br> * Ansprüche * <br> ----- | 1,12, 14-16 | |

**RECHERCHIERTE SACHGEBIETE (Int.Cl.6)**

C08J
B32B
C08L

Der vorliegende Recherchenbericht wurde für alle Patentansprüche erstellt

| Recherchenort | Abschlußdatum der Recherche | Prüfer |
|---|---|---|
| DEN HAAG | 2.November 1995 | Pamies Olle, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)